# DEMANDE DE BREVET EUROPEEN

(11) **EP 0 704 355 A1**
(43) Date de publication de la demande: **03.04.1996**
(21) Numéro de dépôt: 95115044.0
(22) Date de dépôt: 25.09.1995
(51) Int. Cl.: B60R 25/10, G08C 25/00

(54) **Sirène d'alarme pour centrale d'alarme de véhicule**

(30) Priorité: 29.09.1994 FR 9411658
(71) Demandeur: VALEO ELECTRONIQUE, F-94042 Creteil Cédex (FR)
(72) Inventeur: Iacovella, Rocco, F-94400 Vitry sur Seine (FR)
(74) Mandataire: Gamonal, Didier

(57) **Abrégé**

La présente invention concerne une sirène d'alarme pour une centrale d'alarme de véhicule. Elle concerne aussi une centrale d'alarme ainsi équipée.

La centrale d'alarme (1) est connectée par une liaison (11) à une sirène d'alarme déportée (2). La centrale (1) produit une répétition permanente de messages codés, décodés par un module de réception (13) et un module de commande (17) de la sirène (2), de façon à protéger la liaison (11) contre les sabotages et à placer, sur commande autorisée (6, 7), la sirène dans un état de veille ou dans un état d'arrêt.

## Description

La présente invention concerne une sirène d'alarme pour une centrale d'alarme de véhicule. Elle concerne aussi une centrale d'alarme ainsi équipée.

Dans l'état de la technique, on connaît déjà des centrales d'alarme qui sont dotées de capteurs d'intrusion comme des capteurs ultrasonores ou des détecteurs de bris de vitre ou encore des détecteurs de présence, qui sont connectés à un module générateur d'un signal d'alarme quand une condition d'alarme est réalisée. Un tel signal d'alarme est généralement transmis vers une sirène d'alarme disposée assez loin de la centrale d'alarme pour rendre plus difficiles les éventuels sabotages de telles installations.

Ces sirènes d'alarme distantes sont en général de type autoalimenté, c'est-à-dire, qu'elles sont connectées sur la batterie du véhicule d'une part, et sur des accumulateurs internes d'autre part.

De telles sirènes d'alarme sont dotées de moyens de détection du sabotage de la ligne d'alimentation à la batterie du véhicule , de façon à passer sur les accumulateurs internes et faire émettre un signal d'alarme avertissant d'un sabotage.

De plus, la centrale d'alarme est connectée à la sirène d'alarme par une liaison qui permet d'activer la sirène d'alarme quand une condition d'alarme a été vérifiée. Une telle liaison doit être protégée de façon aussi efficace que possible pour éviter des sabotages.

Dans le document EP 520 906, conforme au préambule de la revendication 1, on a proposé une sirène à auto-alimentation du type précité. Selon le dispositif décrit dans ce document, la clé d'accès au véhicule permet de désactiver la centrale d'alarme. En effet, lorsqu'une personne autorisée actionne une clé, de type mécanique ou encore de type électronique, pour pénétrer dans le véhicule, l'alarme est invalidée pour permettre à cette personne autorisée d'accéder au véhicule.

La centrale d'alarme est connectée à l'entrée de la sirène auto-alimentée de façon à la faire passer ou bien dans un état de veille ou bien dans un état d'arrêt, par l'application d'une tension de niveau déterminé sur cette entrée. Les tensions sur l'entrée de la sirène présentent des niveaux différents selon la signification de la commande (arrêt/veille) produite par la centrale d'alarme. Dans l'état de veille, un signal d'alarme peut parvenir et être décodé par la sirène qui sonne. Dans l'état d'arrêt, la sirène ne peut plus sonner, même si un état d'alarme est reçu par la sirène, ou si un état d'alarme est détecté de manière interne par la sirène auto-alimentée elle-même.

De ce fait, il est possible d'arrêter la sirène depuis la centrale d'alarme, en reconnaissant directement à l'aide de la clé d'accès au véhicule le droit d'inhiber le système d'alarme.

Cependant, un tel dispositif n'est pas à l'abri de sabotages évolués selon lesquels le voleur coupe la liaison de la centrale d'alarme à l'entrée de sa sirène auto-alimentée en plaçant une source trompant l'entrée de la sirène auto-alimenté de façon à lui présenter un niveau de tension correspondant à un signal d'arrêt.

De plus, le fait de maintenir une tension constante à l'entrée de la sirène selon la nature de la commande (arrêt/veille) produite par la centrale d'alarme est une source de consommation d'énergie qui est pénalisante dans le cadre d'une application automobile.

La présente invention propose une nouvelle sirène d'alarme, auto-alimentée, qui est protégée des sabotages d'une part, et qui permet d'améliorer la gestion des communications entre la centrale d'alarme et la sirène proprement dite, d'autre part.

En effet, la présente invention concerne une sirène d'alarme du genre comportant un moyen de liaison avec une centrale d'alarme, pour échanger des informations de commande et/ou d'état. L'invention se caractérise notamment en ce que la centrale d'alarme comporte un module générateur d'un message codé qui est émis sur le moyen de liaison et répété en permanence jusqu'à un changement de commande. De plus, la sirène d'alarme comporte un module récepteur du message codé dont la sortie est connectée à un module de commande de la sirène, muni d'un moyen de détection d'une non répétition des messages codés émis sur le moyen de liaison dont la sortie actionne un module sonore.

Le fait que le message soit codé, par exemple selon un codage connu seulement de la centrale d'alarme et de la sirène, procure une grande protection contre les sabotages, dans la mesure où un voleur ne peut plus simuler la présence de la centrale pour présenter à la sirène une commande d'arrêt sans préalablement connaître ce codage.

Selon une caractéristique de l'invention, le moyen de détection de non répétition comporte un circuit de réveil de type "watch-dog".

Cette dernière disposition procure l'avantage de permettre la mise en veille des circuits électroniques de la sirène entre deux répétitions du signal de commande, de sorte que la consommation électrique est réduite. C'est un avantage considérable que de réduire la consommation électrique d'un système d'alarme pour véhicule automobile et de sa sirène, dans la mesure où un tel système est amené à demeurer à l'état de veille pendant de longues périodes de temps, et où la source d'alimentation (batterie du véhicule) a une capacité qui, par nature, est limitée.

Selon un autre aspect de l'invention, le module de commande de la sirène comporte un moyen de décodage d'une commande portée par le message codé émis sur le moyen de liaison et prise parmi un jeu prédéterminé de commandes produites par la centrale d'alarme pour l'actionnement du module sonore. Il est ainsi possible d'augmenter les fonctionnalités de la sirène.

Selon un autre aspect de l'invention, le message comporte un bit de démarrage et un bit de durée, dont la durée détermine la durée de la partie utile du message codé, la partie utile du message codé comportant un nombre prédéterminé de bits de données.

Selon un autre aspect de l'invention, la sirène d'alarme comporte un moyen d'émission d'un message d'accusé de réception, après la réception de chaque changement de message, un message reçu étant considéré comme nouveau s'il est différent du précédent et s'il est reçu consécutivement un nombre prédéterminé de fois, reçu, préférentiellement trois fois. Le module générateur comporte un moyen de réception de l'accusé de réception, qui à l'absence de réception d'un tel accusé de réception, peut produire un signal d'alarme au moyen de l'avertisseur sonore du véhicule, notamment.

Selon un autre aspect de l'invention, la sirène d'alarme comporte :
- un module de réveil connecté à la sortie du module récepteur et qui produit une demande d'interruption transmise à la borne du module de commande ;
- un générateur de surveillance de période, dont la sortie est connectée à une entrée du circuit de réveil ;
de sorte que le module de commande soit mis en fonction parce qu'une durée prédéterminée de temps s'est écoulée sans qu'un message n'ait été reçu.

Selon un autre aspect de l'invention, le générateur est constituée par la mise en série de deux amplificateurs inverseurs dont les entrées sont chargées par un réseau RC, de sorte que les seuils de déclenchement des deux amplificateurs compensent les écarts entre les temps de déclenchement possibles du monostable ainsi constitué.

Selon un autre aspect de l'invention, la sirène comporte aussi un moyen d'alimentation interne constitué par un accumulateur et en ce qu'elle comporte un moyen de détection de sabotage de la ligne principale d'alimentation.

Selon un autre aspect de l'invention, la sirène comporte un transistor dont le collecteur produit une mise à la masse, à travers une résistance, de la borne correspondante de l'accumulateur de façon à réaliser une charge rapide de l'accumulateur interne dont l'autre borne est connectée à la tension d'alimentation de batterie.

Selon un autre aspect de l'invention, la sirène comporte une borne de connexion au fil de liaison à la centrale d'alarme. Elle comporte aussi un circuit de nettoyage de la borne de connexion constitué par un transistor dont la base est connectée à un port de sortie du module de commande de façon à faire périodiquement circuler un fort courant sur la borne de connexion.

Selon un autre aspect de l'invention, la sirène d'alarme comporte un moyen de réception et de décodage d'un code correspondant à la réglementation de sonnerie en fonction d'un code envoyé par la centrale d'alarme par l'intermédiaire de ladite liaison permanente.

L'invention concerne aussi une centrale d'alarme de véhicule. La centrale comporte un module générateur d'un message codé, connecté par une liaison permanente à une sirène d'alarme déportée selon l'invention.

D'autres caractéristiques et avantages de la présente invention seront mieux compris à l'aide de la description et des dessins annexés qui sont :
- la figure 1 : un schéma général d'une centrale d'alarme de véhicule et de sa sirène selon l'invention ;
- la figure 2 : un schéma général d'un mode préféré de réalisation d'une sirène auto-alimentée selon l'invention ;
- la figure 3 : un schéma des formes d'ondes prises par les messages transmis sur la liaison codée ;
- la figure 4 : un schéma d'un mode de réalisation préféré d'un module de réception dans la sirène de la figure 2 ;
- la figure 5 : un schéma du système d'alimentation et d'auto-alimentation de la sirène auto-alimentée ;
- la figure 6 : un schéma d'un système permettant le réveil et l'activation de la sirène proprement dite ; et
- la figure 7 : un schéma de réalisation de détection de sabotage de la ligne d'alimentation.

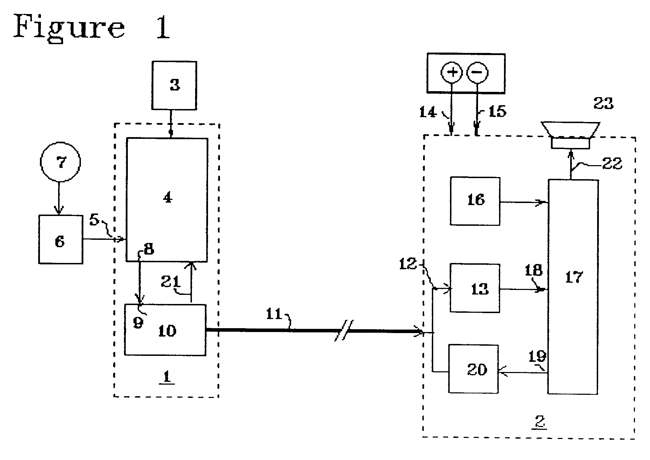

A la figure 1, on a représenté un système d'alarme comportant une centrale d'alarme 1 et une sirène déportée 2. La sirène est auto-alimentée afin de réaliser une protection contre le sabotage de la ligne d'alimentation. La centrale d'alarme 1 est, par exemple, disposée derrière le tableau de bord du véhicule protégé. Elle est connectée à des capteurs ultrasonores 3 disposés dans l'habitacle de façon à surveiller les intrusions et les bris de glace. Les capteurs 3 sont donc connectés à l'entrée d'un module détecteur de condition d'alarme 4 qui comporte une entrée 5 d'activation ou de désactivation provenant du système d'accès au véhicule 6. Le système d'accès au véhicule 6 peut comporter une clef mécanique 7 ou une clef électronique comme un émetteur radiofréquence ou infrarouge. Il sert à reconnaître une personne autorisée et à lui permettre d'accéder au véhicule, notamment en déverrouillant les ouvrants du véhicule et en rendant passive la centrale d'alarme contre les intrusions. Le module de décodage d'une condition d'alarme 4 produit un signal sur une sortie 8 connectée à la borne d'entrée 9 d'un module 10 générateur d'un message codé. Le module 10 est connecté par un fil de liaison 11 à la sirène d'alarme.

La sirène d'alarme comporte un module récepteur 13 dont une borne d'entrée 12 est connectée au fil de liaison 11.

Par ailleurs, l'alimentation principale de la sirène est amenée par deux fils, respectivement 14 de liaison à la borne positive (+), et 15 de liaison à la borne négative (-) de la batterie du véhicule. La tension de la batterie est distribuée aux différents composants de la sirène d'alarme. Si la sirène est de plus auto-alimentée, la tension de la batterie est aussi transmise à un module 16 constitué autour d'un accumulateur interne qui permet de réaliser l'auto-alimentation de la sirène en cas de défaillance de l'alimentation principale, produite par la batterie du véhicule, ou de sabotage des liaisons 14 et 15.

La sirène d'alarme 2 comporte aussi un module de commande, constitué par un micro-contrôleur 17, standard du commerce, disposant de ports d'entrée/sortie, d'une entrée d'interruption, et de ressources comme une mémoire morte enregistrant le programme de fonctionnement du module de commande et de la mémoire vive qui stocke les données en cours de traitement. Le micro-contrôleur 17 surveille l'état de l'accumulateur interne et/ou de l'alimentation principale 14, 15 de façon à commuter sur une recharge rapide de l'accumulateur interne en cas de décharge. Elle comporte aussi ainsi qu'une mémoire programmable, contenant les informations de configuration de la sirène d'alarme dans son environnement précis (type du véhicule, législation, ...). Les informations de configuration sont stockées de cette manière dans l'alarme 1 et transmises à la sirène 2 par un code différent pour chaque configuration par la liaison codée. La recharge rapide se fait par commande de l'alarme 1 (message spécifique) en fonction de l'état de la batterie du véhicule.

Le micro-contrôleur est connecté par une borne d'entrée 18 à la sortie du module de réception 13. Il comporte un moyen de décodage du message codé, reçu de la centrale d'alarme. Dans un mode de réalisation préféré, le message codé représente une commande produite par la centrale d'alarme en fonction de son fonctionnement prédéterminé. De ce fait, le message codé constitue une commande prise parmi un jeu prédéterminé de commandes et qui sont principalement destinées à mettre en action ou non un module sonore 22, 23.

Dans un mode de réalisation préféré, le micro-contrôleur comporte une borne de sortie 19 connectée à un circuit d'émission d'un accusé de réception 20 qui réinjecte un message d'accusé de réception sur le fil de liaison 11. Le module générateur 10 du message codé détecte l'accusé de réception produit par la sirène d'alarme et renseigne de l'absence ou de la présence de cet accusé de réception le module d'alarme 4 par un fil de liaison 21.

Par ailleurs, le micro-contrôleur 17 est connecté par sa borne de sortie 22 à un module sonore 23, constitué par exemple par un vibreur piézo-électrique. Dans un exemple de réalisation, le module sonore est constitué par un haut parleur à membrane. Le moyen de décodage du message reçu, moyen interne au micro-contrôleur et constitué par l'exécution de son programme enregistré à l'aide des ressources qu'il possède, permet donc d'actionner le module sonore 23 par cette borne de sortie 22.

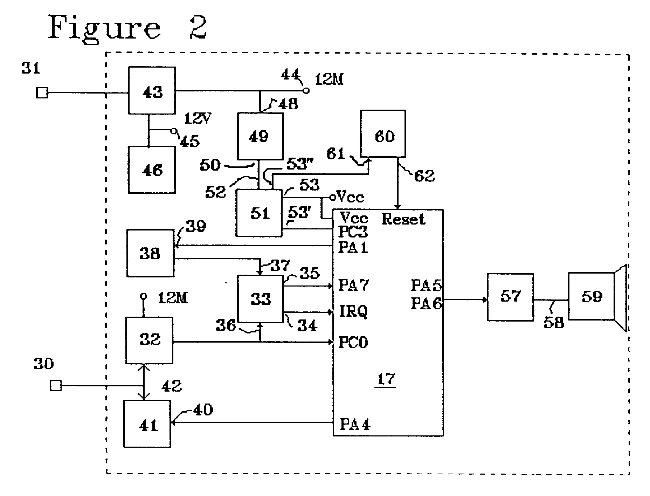

A la figure 2, on a représenté un schéma bloc développé d'un mode de réalisation préféré d'une sirène auto-alimentée selon l'invention.

La sirène auto-alimentée de la figure 2 comporte une borne 30 de connexion au fil de liaison avec la centrale d'alarme et un fil et une borne de connexion 31 connectés à un câble de liaison à la borne positive de la batterie.

Ainsi qu'il est connu, les masses électriques du schéma sont mises au même potentiel qui est connecté à la borne négative de la batterie du véhicule.

Le micro-contrôleur 17 est connecté à la borne d'entrée 30 de la sirène auto-alimentée par l'intermédiaire d'un module de réveil 33 qui est connecté à la borne de sortie du module de réception 32. La borne d'entrée du module de réception 32 est connectée à la borne 30.

Le module de réveil 33 comporte une première borne d'entrée 36 connectée à la borne de sortie du module récepteur 32 précité, qui est de plus connectée à un port d'entrée PC0 du micro-contrôleur 17, et une seconde borne d'entrée 37 qui est connectée à la borne de sortie d'un générateur 38 de période de surveillance (time out), qui permet au micro-contrôleur de se réveiller périodiquement selon le procédé connu sous le terme de "Watch-dog". Le module de réveil comporte une première borne de sortie 34 qui est connectée à une borne d'entrée IRQ de réception d'une demande d'interruption du micro-contrôleur 17. Par ailleurs, il comporte aussi une troisième borne d'entrée 35 connectée à un port d'accès série PCO du micro-contrôleur 17 pour permettre une inhibition du réveil lorsque le micro-contrôleur est réveillé.

Pour activer le "Watch-dog" qui sert de moyen de détection de non répétition, le module 38 comporte une borne d'entrée 39 qui est connectée à un port de sortie PA1 du micro-contrôleur. Quand le micro-contrôleur produit une impulsion sur le port de sortie PA1, le générateur 38 de période de surveillance produit après un temps prédéterminé une impulsion qui est transmise à la borne d'entrée du module de réveil 33. Dans ce cas, une demande d'interruption est présentée sur l'entrée IRQ (du micro-contrôleur qui peut à ce moment là tester l'état de la sirène et notamment celui de la ligne d'alimentation 31.

D'autre part, le micro-contrôleur 17 comporte un port de sortie PA4 qui est connecté à une borne d'entrée 40 d'un module 41 générateur d'un signal d'accusé de réception, qui est produit par une borne de sortie 42 connectée à la borne de connexion 30 au fil de liaison vers la centrale d'alarme selon un protocole prédéterminé préenregistré dans le micro-contrôleur 17. A chaque réception d'un nouveau message codé par le module de réception 32, le micro-contrôleur produit un message d'accusé de réception qui est décodé par la centrale d'alarme pendant trois messages.

En cas de non-répétition, le moyen de détection de non-répétition actionne le module sonore 57- 59 par les ports de sortie PA5, PA6 du micro-contrôleur 17.

Dans un mode de réalisation, le moyen de détection de non répétition comporte un compteur de capacité prédéterminée, dont le démarrage est assuré par la réception d'un message codé. A cette fin, une borne d'activation du compteur est connectée à une borne de sortie du module récepteur 13. La sortie du compteur passe à l'état actif si la capacité du compteur est dépassée, une borne de dépassement de capacité du compteur étant connectée à un port de sortie PA5, PA6 du micro-contrôleur 17 connecté au module sonore.

La capacité du compteur est prédéterminée par avance. Dans un autre mode de réalisation, elle évolue en fonction d'une table de valeurs de la capacité de façon à faire évoluer en synchronisme la période de répétition des messages codés avec le module générateur 10. La table est enregistrée en mémoire du micro-contrôleur 17 et elle est adressée en fonction d'un paramètre d'adressage comme l'arrivée d'un nouveau message détecté par le module de réception.

Dans un autre mode de réalisation de l'invention, où on a optimisé la consommation électrique, le moyen de détection de non répétition comporte un circuit "watch-dog" externe. Le micro-contrôleur est placé en mode veille entre chaque message pour réduire sa consommation électrique. Le "watch-dog" réalise, ainsi qu'il est connu le réveil du micro-contrôleur, ou bien périodiquement, ou bien sur un événement particulier détecté comme on le verra plus loin.

Dans un mode de réalisation, du côté de la centrale d'alarme, si aucun accusé de réception ne revient ou s'il se produit un indicateur de défaut de la sirène, la centrale d'alarme traite le défaut ou détecte un sabotage de la sirène auto-alimentée et active dans ce cas l'avertisseur sonore disposé habituellement dans le véhicule ainsi qu'éventuellement l'allumage périodique ou clignotant des lanternes et feux du véhicule, de façon à indiquer une situation d'alarme.

La sirène auto-alimentée comporte aussi un module 43 qui permet de filtrer et de protéger la tension reçue sur la borne de connexion 31, tension produite par la batterie du véhicule avant sa distribution au reste du circuit. A cette fin, le module d'alimentation 43 comporte une première sortie protégée 44 qui produit une tension de, par exemple, +12 volts, protégée des surtensions. Cette tension protégée des surtensions 12M est connectée notamment sur la polarisation des composants du module récepteur 32.

Le module d'alimentation 43 comporte une deuxième borne de sortie 45 qui est protégée des surtensions filtrées et qui est notée 12V qui est transmise au reste du circuit de la sirène. En particulier, la tension 12V est connectée sur une polarité convenable de l'accumulateur interne. De cette façon, si l'alimentation est défaillante, par exemple par sabotage ou déconnexion de la ligne de connexion à la borne positive (+) de la batterie, la borne 45 est alors alimentée directement par l'accumulateur interne 46.

La borne de connexion 31 est aussi connectée à la borne d'entrée 48 d'un module 49 de détection de sabotage de ligne d'alimentation. Dans ce cas, le module de détection de sabotage 49 est connecté par une borne de sortie 50 à la borne d'entrée 52 d'un module 51 régulateur de tension. Le régulateur de tension 51 comporte une première borne de sortie 53 qui délivre une tension continue de polarisation des circuits électroniques de type TTL, de +5 volts, et qui est notée Vcc. Le régulateur 51 comporte ensuite un comparateur interne dont la borne de sortie 53' est connectée à un port d'entrée PC3 du micro-contrôleur 17. Le comparateur interne du régulateur 51 présente une première borne d'entrée qui est connectée à la tension d'alimentation régulée qui sert de tension de référence et une seconde borne d'entrée connectée à la borne d'entrée 52 de signal de détection de sabotage du module 49.

Quand la tension du signal de détection de sabotage s'abaisse sous la tension de référence connectée à la première borne d'entrée du comparateur interne au régulateur 51, la borne de sortie 53 du régulateur passe à l'état bas, état qui est détecté par le port d'entrée PC3 du micro-contrôleur. Dans ce cas, sauf si le système d'alarme est désactivé, le micro-contrôleur produit sur ses ports de sortie PA5 et PA6 un signal de commande qui est transmis au module sonore constitué d'un module d'alimentation 57 dont la sortie 58 fait sonner un résonateur 59.

Le module 57 est préférentiellement constitué par un pont en "H" comportant quatre interrupteurs montés en pont, la tension issue de la borne protégée filtrée 45 de la ligne d'alimentation 43 étant placée à une extrémité du pont, l'autre extrémité étant placée à la masse, et la diagonale du pont étant connectée aux bornes de polarisation du résonateur de la sirène 59.

La sirène auto-alimentée comporte aussi un module électronique 60 qui permet d'exécuter un redémarrage à chaud du micro-contrôleur 17. Le module 60 de démarrage à chaud comporte une borne d'entrée 61 qui est connectée sur la borne de sortie 53'' du régulateur 51 délivrant un signal de réinitialisation ("reset") lorsque la tension continue régulée d'alimentation du circuit décroît.

Le module 60 comporte une borne de sortie 62 qui est connectée à une borne du micro-contrôleur 17. Quand une impulsion est produite par le module de redémarrage à chaud 60, après que la sortie 53'' de reset du régulateur 51 ait changée d'état, elle permet de redémarrer le compteur de programme à une adresse déterminée par avance de façon à remettre en route les séquences d'initialisation et de configuration de la sirène auto-alimentée lors d'un redémarrage. Si il n'y a pas d'impulsion, la sirène redémarre dans l'état où elle s'était arrêtée.

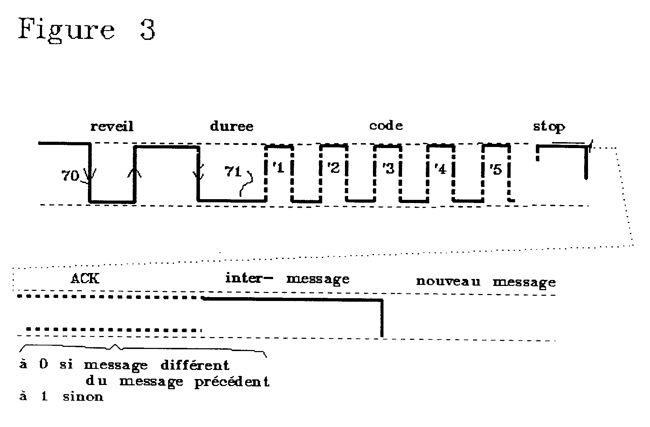

A la figure 3, on a représenté le format des messages échangés sur le fil de liaison 11 entre le module générateur et le module récepteur dans la sirène auto-alimentée.

A la figure 3, on a représenté l'état électrique de la ligne de liaison 11 entre le module générateur et le module récepteur. La tension sur la ligne est constituée par la tension comme le +12 volts de la tension de batterie, protégée et filtrée, tension produite par la sirène d'alarme. La centrale d'alarme amène à la masse la tension de la ligne en fonction du message codé déterminé par le module 4 (figure 1). En l'absence de message, la ligne est à l'état de potentiel haut. Lorsque le message commence, une transition 70 du niveau haut vers le niveau bas constitue un bit de réveil du micro-contrôleur 17 de la sirène auto-alimentée transmis par le récepteur 32 et 33. Par ce réveil, une demande d'interruption est déclenchée sur la borne IRQ du micro-contrôleur 17 qui réveille l'ensemble des fonctions du micro-contrôleur.

Ensuite, l'état de la ligne remonte pour redescendre et pour suivre un palier 71 dont la durée à l'état bas indique la durée des bits qui suivront. Le bit de détermination de la durée du message présente ensuite un front montant 72, durée qui est comprise entre une valeur minimale et une valeur maximale. La durée de message est comptée à partir du front 72 montant de fin du bit de détermination de durée. Puis, le message se développe sur un nombre prédéterminé de bits dont leur durée est déterminée par le bit 71.

Dans un mode préféré de réalisation, le code comporte cinq bits.

Ensuite, un bit de stop est généré pendant lequel l'état électrique de la ligne reste au niveau haut. Puis, un accusé de réception ACK est produit par la sirène auto-alimentée sous forme de deux bits à chaque changement de code et pendant trois messages.

Si l'accusé de réception n'est pas reçu au bout de la période de repos prédéterminée inter-message, la centrale d'alarme en déduit qu'il n'y a plus de sirène auto-alimentée et produit alors un signal d'alarme au moyen de l'avertisseur sonore du véhicule.

A l'inverse, le message produit par le module générateur de la centrale d'alarme étant répété avec une périodicité fixe.

Le protocole qui vient d'être établi peut être varié notamment par la prise en compte, non plus de fronts descendants, mais de durées à l'état haut sur la ligne d'alimentation, ou par des formes d'ondes plus complexes, pour une meilleure immunité aux parasites sur la ligne.

De même, dans un autre mode de réalisation, l'accusé de réception ACK est constitué par une réémission du message reçu du module générateur.

Le fait que le message soit répété périodiquement assure une meilleure protection contre la sabotage de la ligne et empêche de simuler la présence de la centrale d'alarme.

De plus, le message comporte un nombre élevé de valeurs possibles qui permettent de coder un grand nombre de commandes différentes et qui peuvent être reconnues par décodage par la sirène auto-alimentée. De ce fait, la sirène auto-alimentée représentée à la figure 3 peut être standardisée pour toute une série de véhicules, la centrale d'alarme n'appelant que les messages correspondant à des fonctions autorisées sur le type de véhicule considéré.

En particulier, selon les réglementations nationales, les signaux d'alarme que la sirène peut produire présentent des caractéristiques temps-fréquence qui varient d'un pays à l'autre. De ce fait, il est possible d'utiliser le même circuit pour tous les véhicules possibles.

D'autre part, les messages échangés permettent l'utilisation spéciale de la sirène d'alarme auto-alimentée, notamment en utilisant un bouton ou un système de déclenchement d'alarme anti-agression, par manipulation par exemple d'un bouton sur la télécommande d'ouverture ou d'accès au véhicule ou d'un bouton sur le tableau de bord, qui permet de placer le véhicule en état d'alarme.

Bien entendu, parmi les messages possibles, se trouvent les messages de mise en veille, le message d'inactivation, et le message d'alarme proprement dit selon la réglementation déterminée, réglementation donnée par le contenu du message de mise en veille.

Après la production de l'accusé de réception ACK, une période d'attente est prévue pendant laquelle le microprocesseur 31 est en état de faible consommation d'attente. Puis, le mécanisme de chien de garde dit « watch-dog », implémenté notamment avec le générateur 38 de durée de surveillance, réveille le micro-contrôleur 31 si un nouveau message n'a pas été reçu. Dans cette hypothèse, la demande d'interruption produite par le générateur 38 réveille l'ensemble des fonctions et lance l'exécution d'une routine de mise en route de la sirène en mode de détection de sabotage de la liaison 11 entre le générateur et le module de liaison 32.

On va maintenant décrire le mécanisme qui permet de gérer la durée du message proprement dit.

Après le bit de réveil 70, le micro-contrôleur attend sur son port d'entrée PC0 l'arrivée du premier front du bit suivant 71.

De ce fait, la routine de décodage du message ou le circuit de décodage du message comporte un moyen pour produire une scrutation de l'état de la ligne 11 de liaison à chaque instant correspondant à la durée d'un bit. De ce fait, on détecte si le bit de message en cours est à un ou à zéro.

Le message est rangé dans un registre du micro-contrôleur de façon à activer le programme correspondant au décodage du message.

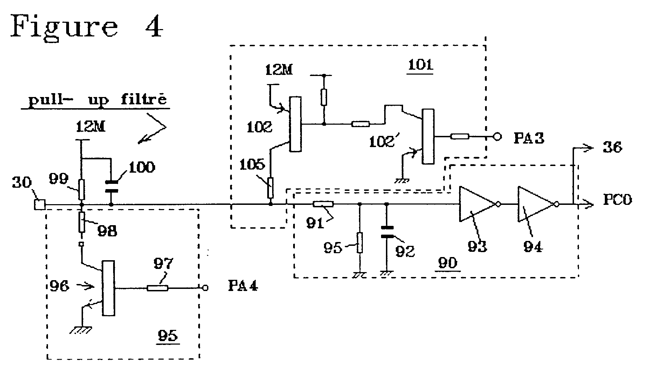

En figure 4, on a représenté un module de réception 32 dans un mode préféré de réalisation. Le module de réception 32 représenté à la figure 4 comporte principalement :
- un module 90 de réception du message proprement dit ;
- un module 95 d'émission d'un accusé de réception ;
- un module 101 de nettoyage du contact 30 de liaison avec la ligne de liaison 11 avec le générateur de message de la centrale d'alarme distante.

Le module de réception proprement dit 90 comporte un pont résistif diviseur constitué d'une première résistance 91 et d'une seconde résistance 95, une borne de la première résistance 91 étant connectée à la borne d'entrée 30 et une borne commune des résistances 91 et 95 étant connectée à une première borne d'un condensateur 92.

La borne libre de la résistance 95 est connectée à la masse. La borne libre du condensateur 92 est connectée à la masse. Le point commun des résistances 91, 95 et du condensateur 92 est connecté à l'entrée d'une chaîne d'amplification constituée ici par deux circuits de type CMOS alimentés pas la même alimentation que le micro-contrôleur.

Dans un mode de réalisation préféré, la chaîne d'amplification est constituée par des amplificateurs inverseurs 93, 94 comme des circuits intégrés CD 4049.

La sortie de la chaîne d'amplification est d'une part transmise à l'entrée 36 du circuit de transmission de la demande d'interruption au micro-contrôleur 31, et d'autre part transmise au port d'entrée PC0 du micro-contrôleur 31.

Une fois le micro-contrôleur réveillé, le port d'entrée PC0 est scruté au rythme déterminé par le second rythme de durée du message ainsi qu'on l'a expliqué plus loin.

L'effet des composants 91, 92, 95 est de ramener la tension de la liaison à des seuils de déclenchement compatibles et à filtrer les parasites.

Le second module du module de réception 32 est constitué par le circuit d'émission de l'accusé de réception. Le circuit d'émission de l'accusé de réception comporte une connexion à un port de sortie PA4 du micro-contrôleur sur lequel apparaissent les impulsions sous 5 volts et qui sont transformées en impulsions de tension adaptées à la ligne de liaison 11, connectée à la borne 30. A cet effet, le port de sortie PA4 du micro-contrôleur 31 est connecté par l'intermédiaire d'une résistance de liaison 97 à la base d'un transistor NPN 96, dont l'émetteur est connecté à la masse et dont le collecteur est connecté à une première borne d'une résistance 98 dont la seconde borne est connectée à la borne de liaison 30.

De plus, une seconde résistance 99 est montée entre la borne +12M et la liaison à la borne de liaison 30. Un condensateur de filtrage 100 est monté en parallèle sur la résistance 99. La résistance 99 sert à fixer le potentiel de la ligne 30 ç un niveau haut (« pull-up »). De ce fait, le transistor 96 fonctionne en commutation de façon à produire des impulsions adaptées à la ligne de liaison 11 connectée à la borne de liaison 30.

Le troisième module 101 de nettoyage du contact 30, disposé dans le module de liaison 32 de l'invention, permet de produire périodiquement pendant les instants de veille, ou à des instants prédéterminés par programmation, un fort appel de courant qui permet de nettoyer l'oxyde qui se forme sur le contact conducteur de liaison 30. A cet effet, le module 101 de nettoyage du contact comporte une borne de connexion au port de sortie PA3 du micro-contrôleur 31. Le port de sortie PA3 du micro-contrôleur 31 est connecté à la base d'un transistor NPN 102' par l'intermédiaire d'une résistance de liaison. L'émetteur du transistor 102' est connectée à la masse et son collecteur est connectée à la base d'un second transistor PNP 102. La base du second transistor 102 est connectée à la première borne d'une seconde résistance, dont l'autre borne et l'émetteur du transistor 102 sont connectés à l'alimentation positive du circuit 43 d'alimentation interne de la sirène auto-alimentée, borne référencée 12M. Le collecteur du transistor 102 est connecté par l'intermédiaire d'une résistance 105 à la borne de liaison 30 quand les impulsions produites par le port de sortie PA3 du micro-contrôleur sont produites, le transistor 102, qui fonctionne en commutation produit un fort courant grâce à la faible résistance 105 de façon à nettoyer le contact 30.

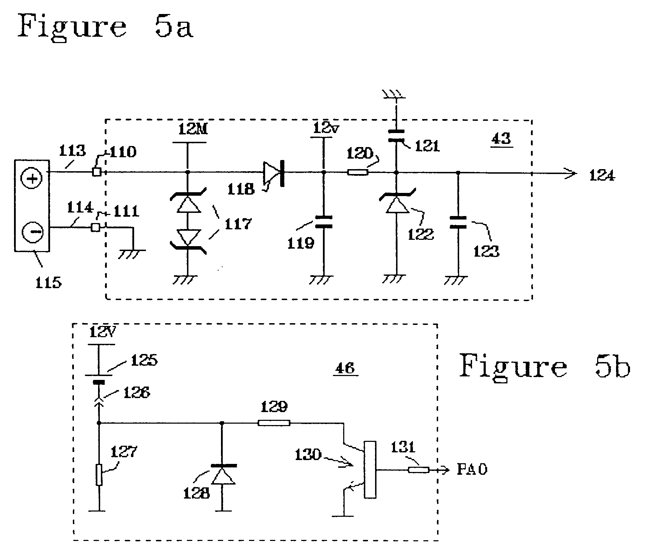

A la figure 5, on a représenté respectivement le module 43 d'alimentation de la sirène auto-alimentée et le circuit 46 de charge et de décharge de la pile ou de la batterie d'accumulateur permettant l'auto-alimentation en cas de sabotage ou de panne de la batterie .

Le module 43 d'alimentation comporte deux bornes 110 et 111 accessibles de l'extérieur de la sirène auto-alimentée, qui sont connectées respectivement des câbles de liaison 114 et 113 aux bornes respectivement plus et moins de la batterie 115 du véhicule. Les câbles de liaison 114 et 113 sont des câbles classiques et qui peuvent être débranchés, ou bien pour des raisons de maintenance ou de réparation de véhicule, ou bien pour des raisons de sabotage.

La borne 111 de liaison à la borne moins de la batterie 115 du véhicule est connectée à la masse 116 de la sirène auto-alimentée. La borne 110 est connectée à une première borne d'une varistance 117 dont l'autre borne est connectée à la masse de la sirène. Le point commun de la borne 110 et de la première borne de la varistance 117 est sortie du module d'alimentation 113 sur une borne 42 placée à la tension de +12 volts protégée des surtensions par la varistance 117, dont l'effet est d'écrêter les sautes brutales de tension produites notamment par la mise en route ou la déconnexion de charges inductives sur la batterie du véhicule.

Le point commun précité est connecté à l'anode d'une diode 119 dont la cathode est connectée d'une part à une première borne d'un condensateur 119 dont l'autre borne est connectée à la masse à une borne de sortie 45 produisant une torsion de 12 volts filtrée référencée aussi 12V pour le reste du circuit, et à une première borne d'une résistance 120.

La seconde borne de la résistance 120 est connectée d'une part à une première borne d'un condensateur électrolytique 121 dont l'autre borne est connectée à la masse de la sirène auto-alimentée, et d'autre part à la cathode d'une diode Zener 122, dont l'anode est connectée à la masse de la sirène, et enfin à une première borne d'un condensateur 123 et à une borne de sortie 124. L'autre borne du condensateur 123 est connectée à la masse de la sirène. La borne de sortie 124 est donc placée à une tension de +12 volts protégée des surtensions, et filtrée et limitée à la tension de Zener. Elle est transmise ensuite à l'entrée du régulateur 51 de la sirène.

Le module 46 est connecté à la borne 45 à la tension de +12 volts, protégée en surtension et filtrée. La borne 45 est connectée à la borne positive de l'accumulateur interne 125 dont la borne négative est connectée à u chevron de soudure 126 qui permet d'avoir l'accumulateur déconnecté lors du test. La borne négative de l'accumulateur interne 125 est connectée à un circuit constitué de résistances, de diodes et de transistors permettant une charge lente ou une charge rapide quand l'accumulateur interne 125 est à une tension insuffisante.

En charge lente, l'accumulateur interne 125 est connecté par sa borne négative à la masse par l'intermédiaire d'une résistance 127 de limitation de courant. De ce fait, l'accumulateur interne 125 peut être chargé à une tension au plus égale à la tension minimale acceptée sur les batteries de véhicule comme la batterie 115. Dans un mode de réalisation préféré, cette tension minimale est de 7,1 volts. Ainsi, dès que la batterie 115 du véhicule est à une tension inférieure à 7,2 volts, c'est l'accumulateur interne 125 qui fournit la tension à la borne 45 pour le reste du circuit de la sirène auto-alimentée, le courant circulant alors à travers une diode 128. La diode 128 est connectée par sa cathode à la borne négative de la batterie 125 et à la masse par son anode. La borne négative de la batterie est connectée par l'intermédiaire d'une résistance 129 au collecteur d'un transistor 130 dont l'émetteur est connecté à la masse de la sirène, et dont la masse est connectée par l'intermédiaire d'une résistance 131 à un port de sortie PA0 du micro-contrôleur. Quand le micro-contrôleur produit sur son port de sortie PA0 une impulsion dont la tension est comprise entre 0 et 5 volts, on réalise une charge accélérée de l'accumulateur interne 125 sur la tension d'alimentation du véhicule 115. De cette façon, il est possible de produire toujours une auto-alimentation efficace de la sirène.

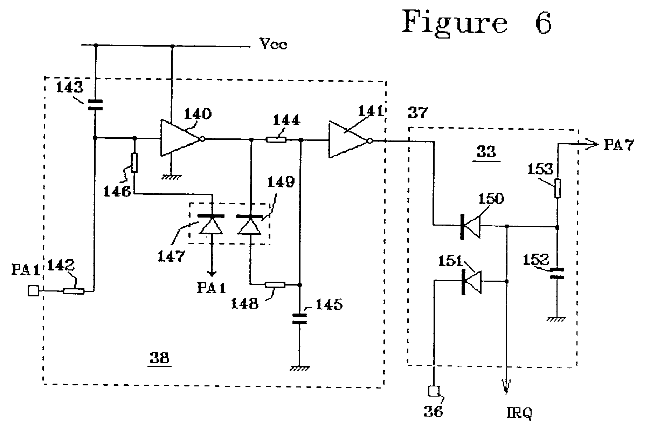

A la figure 6, on a représenté un schéma d'un module générateur d'une durée de réveil ou "Watch-dog" 38 et d'un module de composition produisant la demande d'interruption pour le micro-contrôleur 17, module référencé 33 à la figure 6.

Le module de génération de la demande de réveil de type "Watch-dog" 38 comporte un port et une connexion à un port de sortie PA1 du micro-contrôleur 17. L'impulsion de réveil ou de démarrage du comptage du temps de mise en fonction du "Watch-dog" est transmise à un monostable constitué par ou autour de deux amplificateurs inverseurs respectivement 140 et 141, constitués par des circuits intégrés CD 4049.

Dans ce mode de réalisation, ainsi qu'on va le voir, on s'affranchit notamment des écarts de performance qui existent dans les monostables du commerce de façon à réaliser de manière simple un monostable, réalisable en grande quantité, et avec un cycle de fonctionnement plus stable et mieux centré que les réalisations de l'état de la technique. Il faut en effet tenir compte du fait que la sirène de l'invention est destinée à être produite en grandes quantités et qu'il es impératif de limiter autant que possible la dérive entre composants identiques du dispositif.

Le port d'activation PA1 du micro-contrôleur 31 est connecté par une résistance 142 à une première entrée d'un premier amplificateur inverseur 140. L'entrée de l'amplificateur 140 est chargée par l'intermédiaire d'un condensateur 143 dont l'autre borne est connectée à l'alimentation continue régulée Vcc produite par le régulateur.

De cette façon, l'impulsion de commande de charge est enclenchée par la cellule RC constituée par la résistance 142 et le condensateur 143, entre Vcc et le seuil de déclenchement.

La sortie inverseuse de l'amplificateur 140 est connectée par l'intermédiaire d'une résistance 144 à l'entrée d'un second amplificateur inverseur 141, qui est chargée par l'intermédiaire d'un condensateur 145 dont l'autre borne est connectée à la masse. De ce fait, lorsque la première cellule RC atteint le seuil de déclenchement, une impulsion est transmise à la seconde cellule RC qui se charge entre la masse et le seuil de déclenchement.

Grâce à ce montage, le déclenchement tardif du premier monostable est compensé par le déclenchement rapide du deuxième monostable. Le déclenchement rapide du premier monostable est compensé par le déclenchement tardif du deuxième monostable. La diode 147 et la résistance 146 permettent de décharger rapidement la première cellule, respectivement 149 et 148 pour la deuxième.

Dans un mode de réalisation, on a mesuré, aux tolérances des circuits RC de charge près, les valeurs limite de déclenchement entre 188 et 248 millisecondes, alors qu'en utilisant un simple monostable, comme c'est l'habitude, on obtient un durée minimum de déclenchement de 64 millisecondes et une durée maximum de déclenchement de 468 millisecondes. Par ce montage, on a réduit d'environ 6 fois la dispersion possible.

La sortie du second monostable prise sur la sortie du second amplificateur 141 est connectée comme entrée 37 du module générateur de la demande d'interruption IRQ. L'autre entrée est constituée par la borne 36 de sortie du module 90 de décodage du message dans le générateur 32.

Le module 33 est constitué par une porte ici réalisée par deux diodes respectivement 150 et 151 dont les cathodes sont connectées aux entrées respectivement 37 et 36 et dont les anodes sont connectées en commun à la borne IRQ de demande d'interruption du micro-contrôleur 31.

Le condensateur 152 permet de réaliser un filtrage contre les parasites rayonnés sur la carte électronique réalisée? On évite particulièrement les déclenchements intempestifs de demandes d'interruption. La résistance 153 permet d'inhiber la borne d'entrée de demande d'interruption IRQ lorsque le micro-contrôleur est réveillé en mettant le port PA7 à la masse.

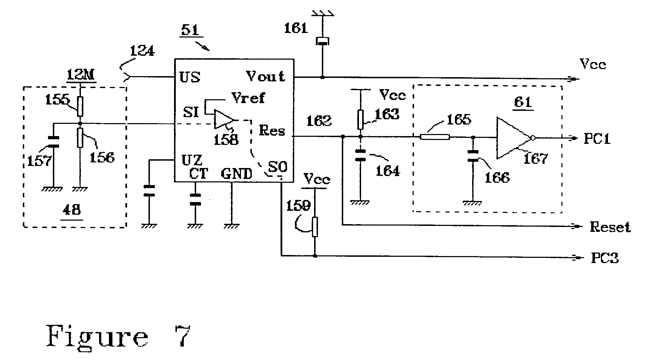

A la figure 7, on a représenté les modules, respectivement, 48 de détection de sabotage des lignes d'alimentation respectivement 112 et 113 à la batterie du véhicule, 51 régulateur, et 61 de production du réveil à chaud (RESET).

Le module 48 de détection de sabotage est constitué par un pont diviseur résistif dont une première borne est connectée à la borne 12M qui délivre une tension protégée des surtensions notamment d'origine inductive, tension produite par le module d'alimentation 43. Le pont résistif est constitué de deux résistance respectivement 155 et 156 dont une borne est placée à la masse et dont la borne commune est connectée à l'entrée SI du circuit intégré régulateur 51. Un exemple d'un tel circuit intégré est constitué dans le circuit intégré L4949.

La borne commune est filtrée par l'intermédiaire d'un condensateur 157. De cette façon, toute déconnexion de la ligne d'alimentation produit une impulsion qui est facilement détectable par un comparateur 158 interne du régulateur 51, dont la sortie est connectée à la borne S0 du régulateur 51, elle-même connectée d'une part à un port d'entrée PC3 du micro-contrôleur 31 et d'autre part par l'intermédiaire d'une résistance 159 à l'alimentation Vcc régulée.

De ce fait, dès que la tension atteint un seuil minimum, le micro-contrôleur peut détecter une situation de sabotage.

Par ailleurs, la borne 124 de sortie du circuit d'alimentation 43, qui est placée à un potentiel de 12 volts protégé des surtensions, filtré et aligné sur une tension Zener, est alors régulée par le circuit 51 ainsi qu'il est connu. La tension de sortie Vout est transmise sur une borne Vcc et protégée par un condensateur électrolytique 161.

La borne Vcc produite par la sortie Vout du régulateur est transmise à la polarisation du reste du circuit.

Le circuit régulateur 51 comporte classiquement une borne de sortie baptisée RES qui produit une impulsion de remise à zéro qui est connectée à la borne d'entrée RESET du micro-contrôleur 31 d'une part, et à la borne d'entrée 162 du module 61 de démarrage à chaud.

Le module 61 de démarrage à chaud comporte une borne d'entrée 162 qui est connectée d'une part à une première borne d'une résistance 163 (qui fait partie du module produisant la réinitialisation (RESET) du micro-contrôleur) dont l'autre borne est connectée à la polarisation plus VCC, et à une première borne d'un condensateur 164 dont l'autre borne est connectée à la masse et à une première borne d'une résistance 165 dont l'autre borne est connectée à la borne commune entre un condensateur 166 et un amplificateur inverseur 167.

L'amplificateur inverseur 167 peut être constitué par le circuit intégré CD 4049.

La borne de sortie de l'amplificateur inverseur 167 est connectée au port d'entrée PC1 du micro-contrôleur de façon à exécuter une routine de redémarrage à chaud, lorsque l'amplificateur inverseur 167 n'a pas déclenché. Dans le cas contraire, le micro-contrôleur effectue une réinitialisation (RESET) à froid, en initialisant toutes ses variables.

Avantageusement, la sirène d'alarme comporte un moyen de réception et de décodage d'un code correspondant à la réglementation de sonnerie en fonction d'un code envoyé par la centrale d'alarme par l'intermédiaire de ladite liaison permanente. En effet, en vertu de la législation propre à chaque pays, la sirène doit être capable d'émettre un signal sonore ayant des caractéristiques propres et différentes de celles exigées dans les autres pays. Par exemple, certains pays exigent un signal à deux tons et d'autres exigent un signal à un ton continu. La centrale d'alarme comporte donc des moyens programmables pour générer et transmettre un code à la sirène définissant les caractéristiques du signal sonore qu'elle doit émettre.

## Revendications

1. Sirène d'alarme du genre comportant un moyen de liaison avec une centrale d'alarme, pour échanger des informations de commande et/ou d'état, caractérisée en ce que la centrale d'alarme (1) comporte un module générateur (10) d'un message codé qui est émis sur le moyen de liaison et répété en permanence, et en ce que la sirène d'alarme (2) comporte un module (13) récepteur et décodeur du message codé dont la sortie est connectée à un module (17) de commande de la sirène, muni d'un moyen de détection d'une non répétition des messages codés émis sur le moyen de liaison dont la sortie actionne un module sonore (22, 23).

2. Sirène d'alarme selon la revendication 1, caractérisé en ce que le module (17) de commande de la sirène comporte un moyen de décodage d'une commande portée par le message codé émis sur le moyen de liaison et prise parmi un jeu prédéterminé de commandes produites par la centrale d'alarme pour l'actionnement du module sonore (22, 23).

3. Sirène d'alarme selon la revendication 1, caractérisée en ce que le moyen de détection de non répétition comporte un circuit de réveil de type "watch-dog".

4. Sirène d'alarme selon la revendication 1 ou 3, caractérisée en ce qu'elle comporte un moyen d'émission d'un message d'accusé de réception, après la réception de chaque nouveau message, un message reçu étant considéré comme nouveau s'il est différent du précédent et s'il est reçu consécutivement un nombre prédéterminé de fois, préférentiellement trois fois, le module générateur (10) comportant un moyen de réception de l'accusé de réception, qui à l'absence de réception d'un tel accusé de réception, peut produire un signal d'alarme au moyen de l'avertisseur sonore du véhicule, notamment.

5. Sirène d'alarme selon les revendications 1 ou 2, caractérisée en ce qu'elle comporte :
- un module de réveil (33) connecté à la sortie du module récepteur (32) et qui produit une demande d'interruption transmise à la borne (IRQ) du module de commande (17) ;
- un générateur (38) de période de surveillance pour "watch-dog", dont la sortie est connectée à une entrée (37) du circuit de réveil ;
de sorte que le module de commande (17) soit remis en fonction après chaque réception de message ou bien par la réception d'un nouveau message, ou bien parce qu'une durée prédéterminée de temps s'est écoulée sans qu'un message n'ait été reçu.

6. Sirène d'alarme selon la revendication 5, caractérisée en ce que le générateur (38) est constituée de la mise en série de deux amplificateurs inverseurs dont les entrées sont chargées par un réseau RC, de sorte que la charge du premier entre une tension d'alimentation et un seuil de déclenchement soit compensée par la charge du second entre une tension inférieure comme la masse, et le seuil de déclenchement du second.

7. Sirène d'alarme selon l'une des revendications précédentes, caractérisée en ce qu'elle comporte aussi un moyen d'alimentation interne constitué par un accumulateur (46) et en ce qu'elle comporte un moyen de détection (49) de sabotage de la ligne principale d'alimentation.

8. Sirène d'alarme selon la revendication 7, caractérisée en ce qu'elle comporte un transistor (130) dont le collecteur produit à travers une résistance de faible valeur une charge rapide de l'accumulateur interne (125) dont l'autre borne est connectée à la tension d'alimentation de batterie.

9. Sirène selon la revendication 1, caractérisée en ce qu'elle comporte une borne de connexion (30) au fil de liaison (11) à la centrale d'alarme, et en ce qu'elle comporte aussi un circuit de nettoyage de la borne de connexion (30) constitué par deux transistors (102, 102') dont la base du premier est connectée à un port de sortie (PA4) du module de commande de façon à faire périodiquement circuler un fort courant sur la borne de connexion.

10. Sirène selon l'une des revendications précédentes, caractérisée en ce qu'elle comporte un moyen de réception et de décodage d'un code correspondant à la réglementation de sonnerie en fonction d'un code envoyé par la centrale d'alarme par l'intermédiaire de ladite liaison permanente (11).

11. Centrale d'alarme de véhicule, caractérisée en ce qu'elle comporte un module générateur (10) d'un message codé, connecté par une liaison permanente (11) à une sirène d'alarme déportée selon l'une des revendications précédentes.
